# EUROPÄISCHE PATENTSCHRIFT

(11) **EP 3 826 223 B1**
(45) Veröffentlichungstag und Bekanntmachung des Hinweises auf die Patenterteilung: **17.08.2022**
(21) Anmeldenummer: 20202769.4
(22) Anmeldetag: 20.10.2020
(51) Int. Cl.: H04L 9/08, B61L 27/00, G06F 21/60, B61L 15/00, B61L 27/20, B61L 27/70

(54) **VERFAHREN UND VORRICHTUNG ZUR BESTIMMUNG EINER ZUORDNUNG EINES SCHLÜSSELS FÜR EIN SYMMETRISCHES KRYPTOGRAPHIEVERFAHREN**
METHOD AND DEVICE FOR DETERMINING AN ASSIGNMENT OF A KEY FOR A SYMMETRIC CRYPTOGRAPHY METHOD
PROCÉDÉ ET DISPOSITIF DE DÉTERMINATION D'UNE AFFECTATION D'UNE CLÉ POUR UN PROCÉDÉ DE CRYPTOGRAPHIE SYMÉTRIQUE

(30) Priorität: 20.11.2019 DE 102019131344
(43) Veröffentlichungstag der Anmeldung: 26.05.2021
(73) Patentinhaber: Thales Management & Services Deutschland GmbH, Stuttgart (DE)
(72) Erfinder: Ophey, Gregor, 71229 Leonberg (DE)
(74) Vertreter: DREISS Patentanwälte PartG mbB

(56) Entgegenhaltungen:
- DE-A1-102011 006 772
- US-A1- 2019 342 088

## Beschreibung

Die Erfindung betrifft ein Verfahren und eine Vorrichtung zur Bestimmung einer Zuordnung eines Schlüssels für ein symmetrisches Kryptographieverfahren.

Fahrzeuge bewegen sich in einer Infrastruktur, die Fahrstrecken umfasst, auf denen sich die Fahrzeuge bewegen können. Um eine Interaktion zwischen Fahrzeugen und der Infrastruktur zu ermöglichen, können Datenverbindungen zwischen mobilen Endgeräten, die in den einzelnen Fahrzeugen angeordnet sind, und stationären Endgeräten, die bezüglich der Infrastruktur stationär angeordnet sind, vorgesehen werden.

Zur Absicherung der Kommunikation zwischen den Endgeräten können kryptographische Schlüssel vorgesehen werden, mit denen Nachrichten, die die Endgeräte austauschen, symmetrisch verschlüsselt werden.

Für schienengebundene Fahrzeuge spezifiziert beispielsweise die UNISIG Spezifikation für das European Rail Traffic Management System, ERTMS, und das European Train Control System, ETCS, in KMC-ETCS Entity Off-line KM FIS Subset 114 Version 1.1.0 vom 17.12.2015, und On-line Key Management FFFIS SUBSET-137 Version 1.0.0 vom 17.12. 2015 Aspekte, die das Verteilen von kryptographischen Schlüsseln an und den Austausch von Nachrichten zwischen einem Onboard Unit, OBU, und einem Radio Block Centre, RBC, betreffen. DE 10 2011 006772 A1 offenbart ein Schlüsselmanagementsystem für Eisenbahnen. US 2019/342088 A1 offenbart kryptographische Schlüssel mit Kryptoperioden.

Das On-line Key Management soll demgegenüber weiter verbessert werden.

Dies wird durch das Verfahren und die Vorrichtung nach den unabhängigen Ansprüchen erreicht.

Ein Verfahren zur Bestimmung einer Zuordnung eines Schlüssels für ein symmetrisches Kryptographieverfahren, sieht vor, dass ein erstes Endgerät aus einer ersten Gruppe von Endgeräten und ein zweites Endgerät aus einer zweiten Gruppe von Endgeräten bestimmt werden, die in einer ersten Mission miteinander kommunizieren sollen, wobei die erste Mission einen ersten Zeitraum definiert, in dem eine Kommunikation zwischen dem ersten Endgerät und dem zweiten Endgerät möglich sein soll, wobei das erste Endgerät in einer zweiten Mission mit dem zweiten Endgerät kommunizieren soll, wobei die zweite Mission einen zweiten Zeitraum definiert, in dem die Kommunikation zwischen dem ersten Endgerät und dem zweiten Endgerät möglich sein soll, und wobei für die Kommunikation zwischen dem ersten Endgerät und dem zweiten Endgerät innerhalb einer Dauer einer Überscheidung des ersten Zeitraums und des zweiten Zeitraums der gleiche Schlüssel zugeordnet wird. Im Zugverkehr werden Einsatzzeiten und Einsatzstrecken für Züge durch Missionen definiert. Zur sicheren Kommunikation von OBUs in den Zügen mit RBCs an der Zugstrecke werden symmetrische Schlüssel ausgegeben und in Schlüsselaustauschvorgängen an die OBUs und RBCs verteilt. Diese Schlüssel werden aufgrund von Schlüssel-Requirements bestimmt, die durch die Missionen definiert sind. Eine Mission bestimmt beispielsweise für eine Zugstrecke einen Zeitraum in dem diese Zugstrecke befahren werden soll. Verschiedene Missionen können zeitliche und/oder räumliche Überlappungen aufweisen. Dies bietet die Möglichkeit, für die Überlappenden Teile der Missionen den gleichen kryptographischen Schlüssel zu verwenden. Dadurch sind weniger Schlüsselaustauschvorgänge für bestimmte oder alle betroffenen RBCs und OBUs nötig. Eine besonders effektive Vorgehensweise sieht vor, zeitlich überlappende Zeiträume zu finden, in denen dieselben kryptographischen Schlüssel einsetzbar sind.

Vorzugsweise wird der gleiche Schlüssel zumindest innerhalb der Dauer der Überschneidung des ersten Zeitraums mit dem zweiten Zeitraum dem ersten Endgerät und dem zweiten Endgerät bereitgestellt. Damit können diese während der Überlappung den gleichen kryptographischen Schlüssel verwenden.

Vorzugsweise werden dem ersten Endgerät und dem zweiten Endgerät für einen ersten Zeitraum und einen zweiten Zeitraum die zueinander zeitlich disjunkt sind, unterschiedliche kryptographische Schlüssel bereitgestellt. Damit können diese außerhalb von Überlappungen verschiedene kryptographische Schlüssel verwenden.

Bevorzugt identifiziert ein Stationsparameter ein zweites Endgerät eindeutig, wobei für eine Vielzahl zweiter Endgeräte abhängig von ihren Stationsparametern eine Gruppe zweiter Endgeräte bestimmt wird, für die der gleiche Schlüssel bereitgestellt wird. Dadurch wird ermöglicht, dass RBCs oder OBUs aus dieser Gruppe den gleichen Schlüssel verwenden. Eine besonders effektive Vorgehensweise sieht vor, räumlich überlappende oder sich schneidende Zugstrecken zu finden, in denen der gleiche kryptographische Schlüssel einsetzbar ist.

Vorzugsweise wird insbesondere in einer Datenbank geprüft, ob für das erste Endgerät bereits ein Schlüssel bereitgestellt ist, wobei der Schlüssel an das erste Endgerät gesendet wird, wenn für das erste Endgerät kein Schlüssel bereitgestellt ist und/oder wobei geprüft wird, ob für das zweite Endgerät bereits ein Schlüssel bereitgestellt ist, wobei der Schlüssel an das zweite Endgerät gesendet wird, wenn für das zweite Endgerät kein Schlüssel bereitgestellt ist, und wobei der Schlüssel anderenfalls nur an das Endgerät gesendet wird, für das noch kein Schlüssel bereitgestellt ist. Dies verringert den Signalisierungsaufwand, der ansonsten für den Schlüsseltausch bei jeder neuen Mission nötig wäre.

Aus einer Menge Schlüssel-Requirements können wenigstens zwei Teilmengen bestimmt werden, wobei die Schlüssel-Requirements unterschiedlicher Teilmengen hinsichtlich ihrer Gültigkeiten zeitlich zueinander disjunkt sind, wobei für Schlüssel-Requirements aus unterschiedlichen Teilmengen verschiedene kryptographische Schlüssel bestimmt werden, wobei jedes der Schlüssel-Requirement eine Zuordnung von Endgeräten zueinander und einen Zeitraum, in dem diese miteinander kommunizieren können müssen, definiert. Die Betrachtung dieser Mengen ermöglicht eine besonders effiziente Berechnung aller Kombinationen von Endgeräten, für die Züge in verschiedenen Missionen verschiedene kryptographische Schlüssel benötigen.

Aus einer Menge Schlüssel-Requirements kann wenigstens eine Teilmenge bestimmt werden, die nur Schlüssel-Requirements umfasst, die hinsichtlich ihrer Gültigkeit zeitlich zueinander nicht disjunkt sind, wobei für jedes Schlüssel-Requirement dieser Teilmenge zumindest innerhalb einer Dauer einer Überschneidung aller Zeiträume der gleiche Schlüssel bestimmt wird. Die Betrachtung dieser Mengen ermöglicht eine besonders effiziente Berechnung aller Kombinationen von Endgeräten, mit denen im Beispiel von demselben Zug in mehreren Missionen kommuniziert werden muss.

Eine entsprechende Vorrichtung umfasst eine Schnittstelle, die ausgebildet ist wenigstens einen kryptographischen Schlüssel für das erste Endgerät oder für wenigstens ein zweites Endgerät bereitzustellen, wobei die Vorrichtung eine Recheneinrichtung umfasst, die ausgebildet ist, das Verfahren auszuführen.

Die Erfindung wird im Folgenden anhand der Figuren in der Zeichnung beschrieben. Weitere vorteilhafte Ausführungsformen ergeben sich aus der Beschreibung und aus der Zeichnung.

Es zeigen:
- Figur 1:: eine schematische Darstellung einer Vorrichtung zur Bestimmung einer Zuordnung eines Schlüssels,
- Figur 2:: Schlüssel-Requirements für einzelne Endgeräte,
- Figur 3:: Schlüssel-Requirements für Gruppen von Endgeräten,
- Figur 4:: Schritte in einem Verfahren zur Bestimmung der Zuordnung des Schlüssels.

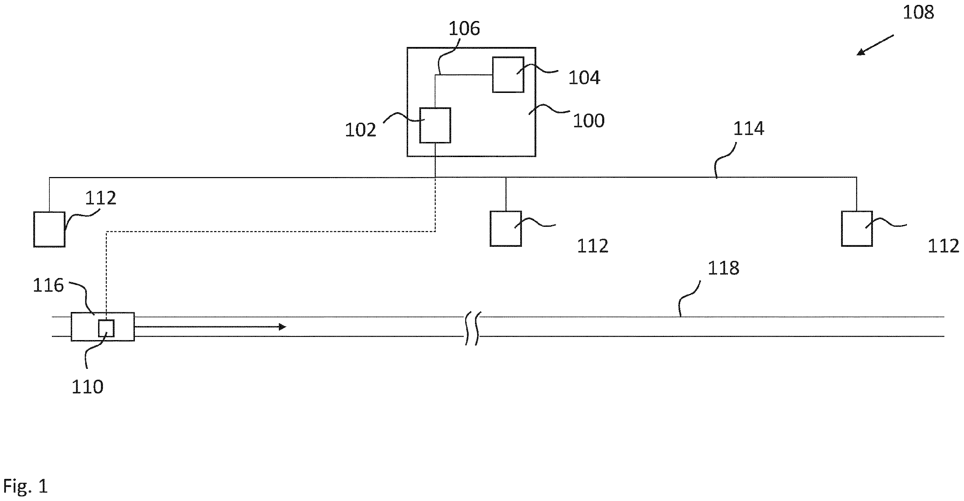

Figur 1 stellt eine Vorrichtung 100 zur Bestimmung einer Zuordnung eines Schlüssels schematisch dar. Die Vorrichtung 100 umfasst eine Schnittstelle 102, die ausgebildet ist wenigstens einen kryptographischen Schlüssel für ein symmetrisches Kryptographieverfahren bereitzustellen. Die Vorrichtung 100 umfasst auch eine Recheneinrichtung 104, die ausgebildet ist ein im Folgenden beschriebenes Verfahren auszuführen. Die Recheneinrichtung 104 und die Schnittstelle 102 sind im Beispiel über eine Datenleitung 106 zur Kommunikation verbunden.

In Figur 1 ist ein bezüglich einer Infrastruktur 108 mobiles erstes Endgerät 110 und eine Vielzahl bezüglich der Infrastruktur 108 stationäre zweite Endgeräte 112 dargestellt. Das mobile erste Endgerät 110 und die stationären zweiten Endgeräte 112 sind im Beispiel ausgebildet mit der Schnittstelle 102 über eine Kommunikationsleitung 114 zu kommunizieren. Das erste Endgerät 110 kann stattdessen auch stationär bezüglich der Infrastruktur 108 sein. Das zweite Endgeräte 112 kann stattdessen auch mobil bezüglich der Infrastruktur 108 sein. Die Kommunikation kann beispielsweise drahtlos, drahtgebunden oder mit einem Kommunikationssystem das drahtlose und drahtgebundene Kommunikation umfasst, erfolgen. Beispielsweise wird dazu in einem GSM-R-Netz nach dem Mobilfunkstandard Global System for Mobile Communications - Rail kommuniziert. Die Kommunikation kann auch durch tragbare Speichergeräte erfolgen. Dazu kann beispielsweise die Schnittstelle 102 als Universal Serial Bus, USB, Schnittstelle ausgebildet sein und die Übertragung durch ein USB Speichermedium erfolgen.

Das mobile Endgerät 110 ist im Beispiel in einem Fahrzeug 116 angeordnet. Das Fahrzeug 116 kann, wie im Beispiel in Figur 1 dargestellt, ein schienengebundenes Fahrzeug sein.

Das Fahrzeug 116 kann auch ein anderes Land-, See- oder Luft-Fahrzeug sein. Die Infrastruktur 108 umfasst die stationären Endgeräte 112 und kann, wie im Beispiel dargestellt, ein Schienensystem 118 umfassen. Die Infrastruktur 108 kann auch eine Straße oder einen Fluss umfassen.

Das Verfahren zur Bestimmung einer Zuordnung von Schlüsseln wird am Beispiel für das erste Endgerät 110 beschrieben, das dem Fahrzeug 116 zugeordnet ist. Für andere Fahrzeuge, denen andere erste Endgeräte 110 zugeordnet sind, wird entsprechend verfahren.

Das Fahrzeug 110 und damit das erste Endgerät 110 ist in der Infrastruktur 108 bewegbar. Um eine sichere Kommunikation zwischen dem Fahrzeug 116 und der Infrastruktur 108 zu gewährleisten, werden für die zweiten Endgeräte 112 und das erste Endgerät 110 ein kryptographischer Schlüssel bereitgestellt. Dieser wird nach einem symmetrischen Verschlüsselungsverfahren erzeugt.

Im Beispiel wird für den kryptographischen Schlüssel selbst das in KMC-ETCS Entity Off-line KM FIS Subset 114 Version 1.1.0 vom 17.12.2015, und On-line Key Management FFFIS SUBSET-137 Version 1.0.0 vom 17.12. 2015 beschriebene Format verwendet.

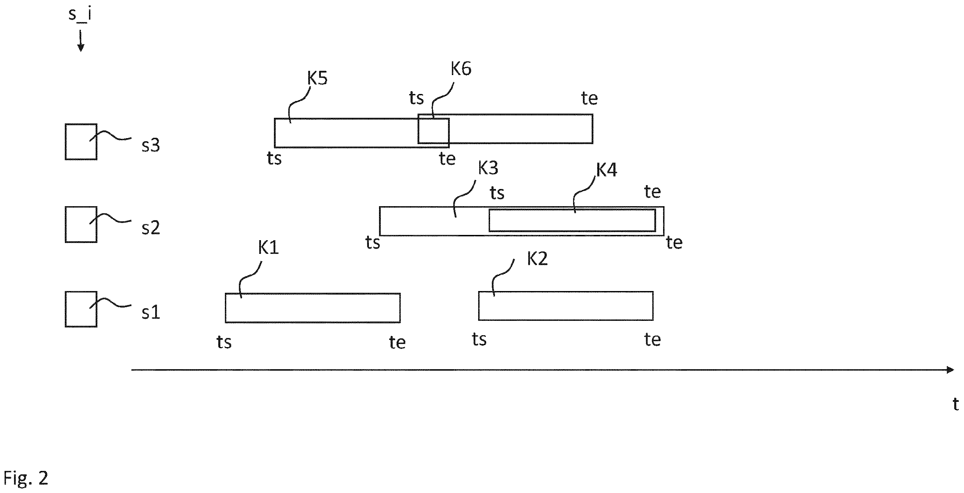

Figur 2 stellt eine Vielzahl n Schlüssel-Requirements Kn für das Fahrzeug 110 für einzelne zweite Endgeräte 112 schematisch dar. Im Beispiel sind sechs unterschiedliche Schlüssel-Requirements K1, K2, K3, K4, K5, K6 dargestellt.

Es können mehr oder weniger Schlüssel-Requirements vorgesehen sein. Diese können auch in von der Darstellung in Figur 2 verschiedener Weise angeordnet sein. Ein Stationsparameter s_i identifiziert ein bestimmtes zweites Endgerät 112 eindeutig. In Figur 2 sind drei zweite Endgeräte 112 dargestellt und von unten nach oben durch die Stationsparameter s1, s2, s3 identifiziert. Es können mehr oder weniger zweite Endgeräte 112 und eine entsprechende Anzahl i Stationsparameter s_i definiert sein. Eine Gültigkeit eines Schlüssel-Requirements Kn ist im Beispiel durch Zeitparameter definiert. In Figur 2 ist eine Dauer für jeden Gültigkeitszeitraum mit einer Startzeit ts und einer Endzeit te dargestellt. Allgemein ist der Gültigkeitszeitraum durch eine Startzeit ts und eine Endzeit te, oder eine Startzeit ts und eine Dauer, oder eine Dauer und eine Endzeit te definiert. Eine Mission definiert für zwei Endgeräte einen Zeitraum in dem eine Kommunikation zwischen diesen Endgeräten möglich sein soll.

In Figure 2 sind die Schlüssel-Requirements K1 und K2 für das zweite Endgerät 112 mit dem Stationsparameter s1 zeitlich disjunkt angeordnet. Das bedeutet, die Kommunikation zwischen dem ersten Endgerät 110 und dem durch den Stationsparameter s1 identifizierten zweiten Endgerät 112 ist für zwei unterschiedliche Missionen unabhängig voneinander definiert.

In Figur 2 sind die Schlüssel-Requirements K3 und K4 für das zweite Endgerät 112 mit dem Stationsparameter s2 über der Zeit t so angeordnet, dass ein erster Zeitraum für das Schlüssel-Requirement K3 einen zweiten Zeitraum für das Schlüssel-Requirement K4 enthält. Das bedeutet, der Gültigkeitszeitraum der für das Schlüssel-Requirement K3 für die Kommunikation zwischen dem mobilen Endgerät 110 und dem durch den Stationsparameter s2 identifizierten zweiten Endgerät 112 definiert ist, umfasst den Gültigkeitszeitraum für das Schlüssel-Requirement K4 vollständig. Das bedeutet, für die dem Schlüssel-Requirement K4 zugrundeliegende Mission muss kein extra Schlüssel verwendet werden, da der Schlüssel, der für das Schlüssel-Requirement K3 zeitlich früher bereits installiert ist, auch für den Zeitraum des Schlüssel-Requirements K4 verwendbar ist.

In Figur 2 sind die Schlüssel-Requirements K5 und K6 für das zweite Endgerät 112 mit dem Stationsparameter s3 über der Zeit t so angeordnet, dass die Zeiträume für das Schlüssel-Requirement K5 und das Schlüssel-Requirement K6 sich teilweise überlappen. Das bedeutet, der Gültigkeitszeitraum, der für das Schlüssel-Requirement K5 für die Kommunikation zwischen dem ersten Endgerät 110 und dem durch den Stationsparameter s3 identifizierten zweiten Endgerät 112 definiert ist, umfasst teilweise den Gültigkeitszeitraum für das Schlüssel-Requirement K6. Das bedeutet, der Schlüssel für die dem Schlüssel-Requirement K5 und dem Schlüssel-Requirement K6 zugrundeliegenden Missionen kann für beide Gültigkeitszeiträume definiert werden, so dass kein extra Schlüssel verwendet werden muss. Dazu wird die Gültigkeitsdauer beispielsweise auf die frühere der Startzeiten und die spätere der Endzeiten festgelegt.

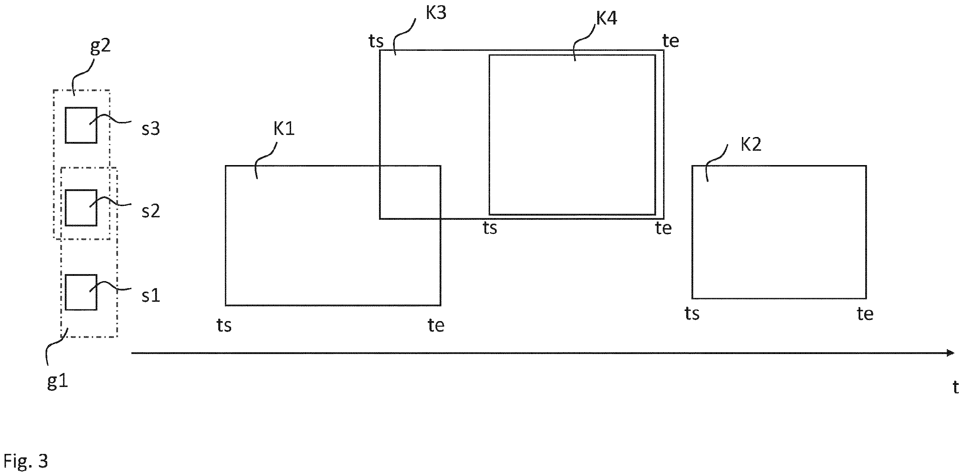

In Figur 3 sind Schlüssel-Requirements K1, K2, K3, K4 für Gruppen g1 und g2 stationärer Endgeräte 112 schematisch dargestellt. Das Schlüssel-Requirement K1 für die Gruppe g1 überlappt zeitlich mit dem Schlüssel-Requirement K3 für die Gruppe g2. Der Zeitraum für das Schlüssel-Requirement K3 enthält den Zeitraum für das Schlüssel-Requirement K4. Beide sind für die Gruppe g2 definiert. Der Zeitraum für das Schlüssel-Requirement K2 für die Gruppe g2 ist bezüglich der Zeiträume anderen Schlüssel-Requirements zeitlich disjunkt. Das Schlüssel-Requirement K4 ist bezüglich des Schlüssel-Requirements K1 zeitlich disjunkt.

Disjunkt bedeutet in diesem Zusammenhang, dass keine zeitliche Überlappung der Gültigkeitsdauer der Schlüssel-Requirements definiert ist.

Es sind beispielhaft zwei Gruppen dargestellt. Es können mehr oder weniger Gruppen vorgesehen sein. Es können Schlüssel-Requirements für Gruppen und einzelne zweite Endgeräte 112 separat oder gemeinsam vorgesehen sein.

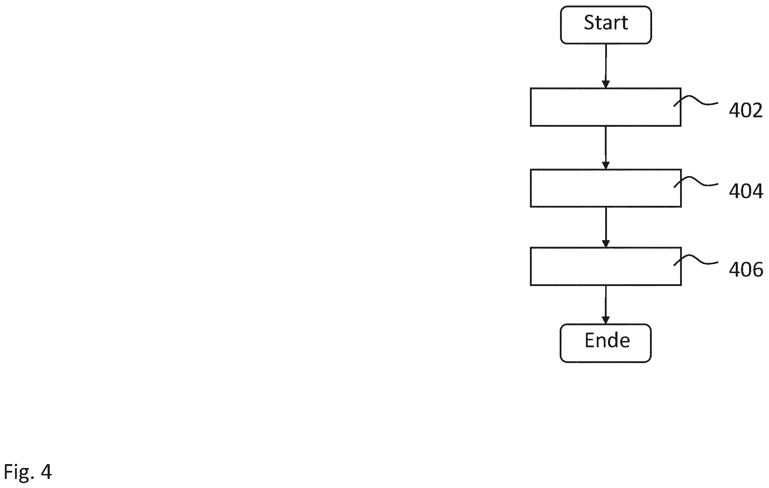

Durch das im Folgenden anhand der Figur 4 beschriebene Verfahren wird definiert, welcher Kombination von zweitem Endgerät 112 und erstem Endgerät 110 der gleiche kryptographische Schlüssel zugeordnet wird und welcher Kombinationen voneinander verschiedene kryptographische Schlüssel zugeordnet werden.

Nach dem Start wird in einem Schritt 402 eine Menge Schlüssel-Requirements bereitgestellt.

Dabei wird von Schlüssel-Requirements für das Fahrzeug 116 ausgegangen, die eine Gültigkeit eines bestimmten Schlüssels für die Kommunikation zwischen dem ersten Endgerät 110 und dem zweiten Endgerät 112 zeitlich begrenzent.

Schlüssel-Requirements werden für Missionen m definiert, in denen ein erstes Endgerät d für einen Zeitraum (ts, te) zwischen einer Startzeit ts und einer Endzeit te eine Kommunikation mit einer Menge S = [s1, ..., sn] einer Anzahl n zweiter Endgeräte s1, ..., sn benötigt:
m = (d, [s1, ..., sn], (ts, te)).

Eine Mission m ist im Beispiel ein Fahrplan für das Befahren einer Zugstrecke durch einen Zug. Der Einsatz des Zuges auf der Zugstrecke ist zeitlich durch den Zeitraum (ts, te) begrenzt, in dem der Fahrplan gültig ist. Die Zugstrecke ist durch die zweiten Endgeräte s1, ..., sn definiert, die der Zug entlang der Zugstrecke passiert. Die zweiten Endgeräte s1, ..., sn können RBCs sein, die an Haltestellen, Weichen, Signalen oder anderen kritischen Punkten der Zugstrecke angeordnet sind. Als erstes Endgerät d dient in diesem Fall beispielsweise ein OBU im Zug.

Die Gültigkeit, d.h. der Zeitraum (ts, te) wird im Allgemeinen über der Zeit t durch eine Menge Zeitparameter definiert.

Ein Zug kann während der Gültigkeit des Fahrplans der Mission in einer anderen Mission eingesetzt werden. Das bedeutet, der Zug kann zeitlich gesehen auf verschiedenen Zugstrecken eingesetzt werden. Wenn die Zugstrecken sich nicht kreuzen, d.h. disjunkt sind, weisen die Missionen keine gemeinsamen zweiten Endgeräte s1, ..., sn auf. Wenn sich die Zugstrecken kreuzen, weisen die Missionen ein oder mehrere gemeinsame zweite Endgeräte s1, ..., sn auf, d.h. die Zugstrecken weisen eine gemeinsame Kreuzung oder mehrere gemeinsame Kreuzungen auf. Eine der Zugstrecken kann eine andere Zugstrecke oder mehrere andere Zugstrecken enthalten. Das bedeutete eine der Missionen umfasst alle zweiten Endgeräte s1, ..., sn der anderen Mission oder der anderen Missionen.

Das Schlüssel-Requirement für das Fahrzeug 116 definiert eine zeitliche Gültigkeit eines Schlüssels für die Kommunikation zwischen dem ersten Endgerät 110 des Fahrzeugs 116 und wenigstens einem zweiten Endgerät 112.

Ein beispielhaftes Schlüssel-Requirement für eine Mission m ist durch kr_i = (d, [s_i], (ts, te)) definiert. Im Beispiel bezeichnet d das erste Endgerät 110 und s_i die zweiten Endgeräte 112, mit denen das mit d bezeichnete erste Endgerät 110 für die Mission m kommunizieren können soll.

Wenn für jede Kombination von erstem Endgerät d und zweitem Endgerät s_i ein individueller kryptographischer Schlüssel benötigt wird, wird beispielsweise eine erste Menge KR Schlüssel-Requirements bestimmt:
KR = [(d, [s1], (ts, te)), ..., (d, [sn], (ts, te))]]

Wenn beispielsweise für die Kombination von erstem Endgerät d mit jedem zweiten Endgerät s_i aus einer ersten Gruppe g1 = [s1, ..., sk] dar selbe erste kryptographische Schlüssel verwendet werden soll, und für die Kombination von erstem Endgerät d mit jedem zweiten Endgerät s_i aus einer zweiten Gruppe g2 = [sk+1, ..., sn] der gleiche zweite kryptographische Schlüssel verwendet werden soll, wird beispielsweise eine zweite Menge KR Schlüssel-Requirements bestimmt:
KR = [(d, [s1, ..., sk], (ts, te)), (d, [sk+1, ..., sn], (ts, te))]

Der Stationsparameter s_i identifiziert ein zweites Endgerät im Beispiel eindeutig. Für jeden kryptographischen Schlüsselr K wird im Beispiel ebenfalls dieselbe Struktur verwendet, die auch für die Schlüssel-Requirements KR verwendet wird:
K = (d, [s1, ..., sn], (ts, te))

Zudem kann vorgesehen sein, eine Zuordnung zwischen einem kryptographischen Schlüssel k und jedem Schlüssel-Requirement zu pflegen:
KR k = [kr_1, ..., kr_n]

Davon ausgehend, wird für das erste Endgerät d eine Menge Schlüssel-Requirements KR d bestimmt:
KR d = [kr | kr <- KR; device (kr) = d]

Nach dem Schritt 402 wird ein Schritt 404 ausgeführt.

Im Schritt 404 werden unterschiedliche Schlüssel-Requirements kr bestimmt, deren Gültigkeiten zeitlich disjunkt sind und/oder unterschiedliche Schlüssel-Requirements, deren Gültigkeiten nicht zeitlich disjunkt sind.

Im Beispiel wird eine Menge disjunkter Teilmengen der Menge der Schlüssel-Requirements KR d bestimmt.

Die Menge Schlüssel-Requirements KR d wird in Teilmengen unterteilt, so dass für jedes Paar Teilmengen S und T die darin enthaltenen Schlüssel-Requirements disjunkt sind.

Dies wird erreicht durch die folgende Berechnungsvorschrift:
1. A = KR d; B = []; C = []
2. x = head A; A = tail A; B = B + x
3. foreach y in A do
4. if not disjoint x y then
   B = B + y; A / y
6. C = C + B
7. if A not empty then
   goto 2.

Mit der Funktion "head" wird das erste Element der Menge A bestimmt. Mit der Funktion "tail" wird der Rest der Menge A ohne das erste Element bestimmt. Mit der Funktion "disjoint" wird geprüft, ob x und y disjunkt sind. Der Operator "+" fügt an eine Menge an, der Operator "/" entfernt aus einer Menge. Am Ende enthält C eine Menge disjunkter Teilmengen von KR d.

Das bedeutet, die Menge Schlüssel-Requirements KR d wird in disjunkte Teilmengen unterteilt. In einem Aspekt werden wenigstens zwei zueinander disjunkte Teilmengen der Zeitparameter ts, te bestimmt. Das bedeutet, die Zeiträume, die durch die jeweiligen Zeitparameter (ts, te) definiert sind, werden als Menge von Zeitparametern daraufhin geprüft, ob die Mengen disjunkt sind oder nicht. Schlüssel-Requirements deren Zeitparameter (ts, te) zueinander disjunkten Teilmengen zugeordnet sind, werden unterschiedlichen der disjunkten Teilmengen zugeordnet.

Im Beispiel ist die Menge Zeitparameter (ts, te) für einen Gültigkeitszeitraum durch die Startzeit ts und die Endzeit te definiert. Der Gültigkeitszeitraum und die Menge Zeitparameter kann auch durch die Startzeit ts und eine Dauer, oder eine Dauer und die Endzeit te definiert sein.

Für die Gruppen kann in einem Aspekt vorgesehen sein, dass für eine Vielzahl Schlüssel-Requirements, die jeweils wenigstens einen der Stationsparameter s_i umfassen, abhängig von ihren Stationsparametern s_i eine Gruppe zweiter Endgeräte bestimmt wird, für die dasselbe Schlüsselpaar bereitgestellt wird.

Zur Bestimmung einer Zuordnung eines Schlüssels werden allgemein ein erstes Endgerät 110 aus einer ersten Gruppe von Endgeräten und ein zweites Endgerät 112 aus einer zweiten Gruppe von Endgeräten bestimmt, die in einer ersten Mission miteinander kommunizieren sollen. Die erste Mission definiert einen ersten Zeitraum, in dem eine Kommunikation zwischen dem ersten Endgerät und dem zweiten Endgerät möglich sein soll.

Zur Bestimmung der Zuordnung des Schlüssels wird eine zweite Mission identifiziert, in der das erste Endgerät 110 mit dem zweiten Endgerät 112 kommunizieren soll. Die zweite Mission definiert einen zweiten Zeitraum, in dem die Kommunikation zwischen dem ersten Endgerät 110 und dem zweiten Endgerät 112 möglich sein soll. Für die Kommunikation zwischen dem ersten Endgerät 110 und dem zweiten Endgerät 112 wird innerhalb einer Dauer der Überscheidung des ersten Zeitraums mit dem zweiten Zeitraum der gleiche Schlüssel zugeordnet.

### Anschließend wird ein Schritt 406 ausgeführt.

Im Schritt 406 werden für unterschiedliche Schlüssel-Requirements, deren Gültigkeiten zeitlich disjunkt sind, unterschiedliche kryptographische Schlüssel bereitgestellt. Für unterschiedliche Schlüssel-Requirements, deren Gültigkeiten nicht zeitlich disjunkt sind, wird abhängig von der Zuordnung der gleiche kryptographische Schlüssel bereitgestellt. Der gleiche Schlüssel wird dem ersten Endgerät 110 und dem zweiten Endgerät 112 im Beispiel zumindest innerhalb der Dauer der Überschneidung des ersten Zeitraums mit dem zweiten Zeitraum bereitgestellt. Im Beispiel werden dem ersten Endgerät 110 und dem zweiten Endgerät 112 für einen ersten Zeitraum und einen zweiten Zeitraum die zueinander zeitlich disjunkt sind, unterschiedliche kryptographische Schlüssel bereitgestellt.

Im Beispiel wird für alle Schlüssel-Requirements aus derselben der Teilmengen von KR der gleiche kryptographische Schlüssel bereitgestellt. Im Beispiel wird für alle Teilmengen der Menge der Schlüssel-Requirements KR d ein anderer kryptographischer Schlüssel bereitgestellt.

Der jeweilige Schlüssel selbst wird unabhängig vom beispielhaft beschriebenen Verfahren gemäß einem symmetrischen Verschlüsselungsverfahren erzeugt.

Der gleiche kryptographische Schlüssel wird im Beispiel als erster kryptographischer Schlüssel für das erste Endgerät 110 und als zweiter kryptographischer Schlüssel für das zweite Endgerät 112 bereitgestellt.

Das Verfahren sieht in einem Aspekt vor, dass die jeweiligen Schlüssel von einem Schlüsselmanagementserver bereitgestellt werden.

Der erste kryptographische Schlüssel wird im Beispiel dem ersten Endgerät 110 bereitgestellt. Der zweite kryptographische Schlüssel wird im Beispiel dem zweiten Endgerät 112 bereitgestellt.

Der erste kryptographische Schlüssel wird beispielsweise über die Schnittstelle 102 an das erste Endgerät 110 gesendet. Der zweite kryptographische Schlüssel wird beispielsweise über die Schnittstelle 102 an das zweite Endgerät 112 gesendet. Wenn der zweite kryptographische Schlüssel einer Gruppe von zweiten Endgeräten 112 zugeordnet ist, wird der zweite kryptographische Schlüssel im Beispiel an alle zweiten Endgeräte 112 der Gruppe gesendet.

In einem Aspekt kann vorgesehen sein zu prüfen, ob für das erste Endgerät 110 und das zweite Endgerät 112 bereits ein kryptographischer Schlüssel bereitgestellt ist. Für diesen kryptographischen Schlüssel wird in diesem Aspekt der erste kryptographische Schlüssel an das erste Endgerät 110 gesendet, wenn kein kryptographischer Schlüssel für das mobile Endgerät 110 bereitgestellt ist. Alternativ dazu oder zusätzlich kann vorgesehen sein, dass der zweite kryptographische Schlüssel an das zweite Endgerät 112 gesendet wird, wenn kein kryptographischer Schlüssel für das zweite Endgerät 112 bereitgestellt ist. Anderenfalls wird in diesem Aspekt für diesen kryptographischen Schlüssel nur einer der beiden Schlüssel für das Endgerät bereitgestellt, für das dieser kryptographische Schlüssel noch nicht bereitgestellt wurde oder keiner der beiden Schlüssel gesendet. Dadurch wird der Signalisierungsaufwand signifikant reduziert.

Im Beispiel wird eine Datenbank gepflegt, in der die Zuordnungen der kryptographischen Schlüssel zu den Endgeräten gespeichert ist. Anhand dieser Datenbank wird geprüft, ob aufgrund einer früheren Mission auf dem jeweiligen Endgerät bereits ein kryptographischer Schlüssel existiert. Dieser wird im Beispiel weiterverwendet, ohne den kryptographischen Schlüssel erneut zu senden.

Es ist auch möglich, statt dem kryptographischen Schlüssel nur einen der Zeitparameter ts, te zu senden, um eine Gültigkeitsdauer eines kryptographischen Schlüssels zu verlängern. In diesem Fall wird beispielweise mit jedem kryptographischen Schlüssel auch wenigstens ein diesem kryptographischen Schlüssel zugeordneter Gültigkeitsparameter übertragen. Dieser und die Zuordnung zum kryptographischen Schlüssel wird in der Datenbank gepflegt, d.h. abgespeichert, und ausgewertet. Wenn der Austausch des Gültigkeitsparameters ausreicht, kann dieser gesendet werden ohne den kryptographischen Schlüssel selbst neu zu übertragen.

Anschließend endet das Verfahren.

## Patentansprüche

1. Verfahren zur Bestimmung einer Zuordnung eines Schlüssels für ein symmetrisches Kryptographieverfahren, wobei ein erstes Endgerät (110) aus einer ersten Gruppe von Endgeräten und ein zweites Endgerät (112) aus einer zweiten Gruppe von Endgeräten bestimmt werden, die in einer ersten Mission miteinander kommunizieren sollen, wobei die erste Mission einen ersten Zeitraum definiert, in dem eine Kommunikation zwischen dem ersten Endgerät (110) und dem zweiten Endgerät (112) möglich sein soll, wobei das erste Endgerät in einer zweiten Mission mit dem zweiten Endgerät (112) kommunizieren soll, wobei die zweite Mission einen zweiten Zeitraum definiert, in dem die Kommunikation zwischen dem ersten Endgerät (110) und dem zweiten Endgerät (112) möglich sein soll, und wobei für die Kommunikation zwischen dem ersten Endgerät (110) und dem zweiten Endgerät (112) innerhalb einer Dauer einer Überscheidung des ersten Zeitraums mit dem zweiten Zeitraum der gleiche Schlüssel zugeordnet wird (404).

2. Verfahren nach Anspruch 1, **dadurch gekennzeichnet, dass** der gleiche Schlüssel zumindest innerhalb der Dauer der Überschneidung des ersten Zeitraums mit dem zweiten Zeitraum dem ersten Endgerät und dem zweiten Endgerät bereitgestellt wird (406).

3. Verfahren nach Anspruch 1 oder 2, **dadurch gekennzeichnet, dass** dem ersten Endgerät (110) und dem zweiten Endgerät (112) für einen ersten Zeitraum und einen zweiten Zeitraum die zueinander zeitlich disjunkt sind, unterschiedliche kryptographische Schlüssel bereitgestellt werden (406).

4. Verfahren nach einem der vorherigen Ansprüche, **dadurch gekennzeichnet, dass** ein Stationsparameter (s_i) ein zweites Endgerät (112) eindeutig identifiziert, wobei für eine Vielzahl zweiter Endgeräte (112) abhängig von ihren Stationsparametern (s_i) eine Gruppe zweiter Endgeräte bestimmt wird (s1, ..., sn), für die der gleiche Schlüssel bereitgestellt wird (406).

5. Verfahren nach einem der vorherigen Ansprüche, **dadurch gekennzeichnet, dass** insbesondere in einer Datenbank geprüft wird, ob für das erste Endgerät (110) bereits ein Schlüssel bereitgestellt ist, wobei der Schlüssel an das erste Endgerät (110) gesendet wird, wenn für das erste Endgerät (110) kein Schlüssel bereitgestellt ist und/oder wobei geprüft wird, ob für das zweite Endgerät (112) bereits ein Schlüssel bereitgestellt ist, wobei der Schlüssel an das zweite Endgerät (112) gesendet wird, wenn für das zweite Endgerät (112) kein Schlüssel bereitgestellt ist, und wobei der Schlüssel anderenfalls nur an das Endgerät gesendet wird, für das noch kein Schlüssel bereitgestellt ist.

6. Verfahren nach einem der vorherigen Ansprüche, **dadurch gekennzeichnet, dass** aus einer Menge Schlüssel-Requirements wenigstens zwei Teilmengen bestimmt werden (404), wobei die Schlüssel-Requirements unterschiedlicher Teilmengen hinsichtlich ihrer Gültigkeiten zeitlich zueinander disjunkt sind, wobei für Schlüssel-Requirements aus unterschiedlichen Teilmengen verschiedene kryptographische Schlüssel bestimmt werden (406), wobei jedes der Schlüssel-Requirements eine Zuordnung von Endgeräten zueinander und einen Zeitraum, in dem diese miteinander kommunizieren können müssen, definiert.

7. Verfahren nach einem der vorherigen Ansprüche, **dadurch gekennzeichnet, dass** aus einer Menge Schlüssel-Requirements wenigstens eine Teilmenge bestimmt wird (404), die nur Schlüssel-Requirements umfasst, die hinsichtlich ihrer Gültigkeit zeitlich zueinander nicht disjunkt sind, wobei für jedes Schlüssel-Requirement dieser Teilmenge zumindest innerhalb einer Dauer einer Überschneidung aller Zeiträume der gleiche Schlüssel bestimmt wird (406).

8. Vorrichtung (100) zur Bestimmung einer Zuordnung eines Schlüssels für ein symmetrisches Kryptographieverfahren, **dadurch gekennzeichnet, dass** die Vorrichtung eine Schnittstelle (102) umfasst, die ausgebildet ist wenigstens einen kryptographischen Schlüssel für ein erstes Endgerät (110) oder für wenigstens ein zweites Endgerät (112) bereitzustellen, wobei die Vorrichtung eine Recheneinrichtung (104) umfasst, die ausgebildet ist, das Verfahren nach einem der Ansprüche 1 bis 7 auszuführen.

## Claims

1. Method for identifying an assignment of a key for a symmetric cryptography method, a first terminal (110) being identified from a first group of terminals and a second terminal (112) being identified from a second group of terminals, which first and second terminals are intended to communicate with one another in a first mission, wherein the first mission defines a first time period in which communication between the first terminal (110) and the second terminal (112) is intended to be possible, wherein the first terminal is intended to communicate with the second terminal (112) in a second mission, wherein the second mission defines a second time period in which communication between the first terminal (110) and the second terminal (112) is intended to be possible, and wherein, for communication between the first terminal (110) and the second terminal (112), the same key is assigned (404) within a duration of an overlap of the first time period and the second time period.

2. Method according to claim 1, **characterized in that** the same key is provided (406) to the first terminal and the second terminal at least within the duration of the intersection of the first time period and the second time period.

3. Method according to claim 1 or 2, **characterized in that** different cryptographic keys are provided (406) to the first terminal (110) and the second terminal (112) for a first time period and a second time period which are temporally disjoint from one another.

4. Method according to one of the preceding claims, **characterized in that** a station parameter (s_i) uniquely identifies a second terminal (112), a group of second terminals (s1, ..., sn) being identified for a plurality of second terminals (112) on the basis of their station parameters (s_i), for which group the same key is provided (406).

5. Method according to one of the preceding claims, **characterized in that** it is checked, in particular in a database, whether a key is already provided for the first terminal (110), the key being sent to the first terminal (110) if no key is provided for the first terminal (110), and/or it is checked whether a key is already provided for the second terminal (112), the key being sent to the second terminal (112) if no key is provided for the second terminal (112), and the key otherwise being sent only to the terminal for which no key is yet provided.

6. Method according to one of the preceding claims, **characterized in that** at least two subsets are identified (404) from a set of key requirements, the key requirements of different subsets being temporally disjoint in terms of their validity, different cryptographic keys being identified (406) for key requirements from different subsets, and each of the key requirements defining an assignment of terminals to one another and a time period in which they must be able to communicate with one another.

7. Method according to one of the preceding claims, **characterized in that** at least one subset which only comprises key requirements which are not temporally disjoint in terms of their validity is identified (404) from a set of key requirements, this subset being identified (406) for each key requirement at least within a duration of an intersection of all time periods of the same key.

8. Apparatus (100) for identifying an assignment of a key for a symmetric cryptography method, **characterized in that** the device comprises an interface (102) which is designed to provide at least one cryptographic key for a first terminal (110) or for at least one second terminal (112), the apparatus comprising a computing device (104) which is designed to carry out the method according to one of claims 1 to 7.

## Revendications

1. Procédé de détermination d'une attribution d'une clé pour un procédé de cryptographie symétrique, dans lequel on détermine un premier terminal (110) parmi un premier groupe de terminaux et un deuxième terminal (112) parmi un deuxième groupe de terminaux, qui doivent communiquer entre eux dans une première mission, dans lequel la première mission définit un premier espace de temps pendant lequel une communication entre le premier terminal (110) et le deuxième terminal (112) doit être possible, dans lequel le premier terminal doit communiquer avec le deuxième terminal (112) dans une deuxième mission, dans lequel la deuxième mission définit un deuxième espace de temps pendant lequel la communication entre le premier terminal (110) et le deuxième terminal (112) doit être possible, et dans lequel la même clé est attribuée (404) pour la communication entre le premier terminal (110) et le deuxième terminal (112) à l'intérieur d'une durée d'un chevauchement du premier espace de temps et du deuxième espace de temps.

2. Procédé selon la revendication 1, **caractérisé par le fait que** la même clé est fournie (406) au premier terminal et au deuxième terminal au moins à l'intérieur de la durée du chevauchement du premier espace de temps et du deuxième espace de temps.

3. Procédé selon la revendication 1 ou 2, **caractérisé par le fait que** des clés cryptographiques différentes sont fournies (406) au premier terminal (110) et au deuxième terminal (112) pour un premier espace de temps et un deuxième espace de temps qui sont disjoints dans le temps les uns des autres.

4. Procédé selon l'une quelconque des revendications précédentes, **caractérisé par le fait qu'**un paramètre de station (s_i) identifie de manière unique un deuxième terminal (112), dans lequel on détermine, pour une pluralité de deuxièmes terminaux (112), en fonction de leurs paramètres de station (s_i), un groupe de deuxièmes terminaux (s1, ..., sn) pour lesquels la même clé est fournie (406).

5. Procédé selon l'une quelconque des revendications précédentes, **caractérisé par le fait que** l'on vérifie en particulier dans une base de données si une clé est déjà fournie pour le premier terminal (110), la clé étant envoyée au premier terminal (110) si aucune clé n'est fournie pour le premier terminal (110), et/ou dans lequel on vérifie si une clé est déjà fournie pour le deuxième terminal (112), la clé étant envoyée au deuxième terminal (112) si aucune clé n'est fournie pour le deuxième terminal (112), et dans lequel, sinon, la clé n'est envoyée qu'au terminal pour lequel aucune clé n'est encore fournie.

6. Procédé selon l'une quelconque des revendications précédentes, **caractérisé par le fait qu'**au moins deux sous-ensembles sont déterminés (404) à partir d'un ensemble d'exigences de clé, dans lequel les exigences de clé de différents sous-ensembles sont disjointes temporellement quant à leurs validités, dans lequel différentes clés cryptographiques sont déterminées (406) pour des exigences de clé de différents sous-ensembles, dans lequel chacune des exigences de clé définit une attribution de terminaux entre eux et un espace de temps pendant lequel ils doivent pouvoir communiquer entre eux.

7. Procédé selon l'une quelconque des revendications précédentes, **caractérisé par le fait qu'**au moins un sous-ensemble est déterminé (404) à partir d'un ensemble d'exigences de clé, qui ne comprend que des exigences de clé qui ne sont pas disjointes temporellement quant à leur validité, dans lequel la même clé est déterminée (406) pour chaque exigence de clé de ce sous-ensemble au moins à l'intérieur d'une durée d'un chevauchement de tous les espaces de temps.

8. Dispositif (100) de détermination d'une attribution d'une clé pour un procédé de cryptographie symétrique, **caractérisé par le fait que** le dispositif comprend une interface (102) qui est adaptée pour fournir au moins une clé cryptographique pour un premier terminal (110) ou pour au moins un deuxième terminal (112), dans lequel le dispositif comprend un dispositif informatique (104) qui est adapté pour mettre en œuvre le procédé selon l'une quelconque des revendications 1 à 7.
